# EUROPÄISCHE PATENTANMELDUNG

(11) **EP 4 270 002 A1**
(43) Veröffentlichungstag der Anmeldung: **01.11.2023**
(21) Anmeldenummer: 22170431.5
(22) Anmeldetag: 28.04.2022
(51) Int. Cl.: G01N 30/60

(54) **HALTERUNG FÜR EINE KARTUSCHE UND VERFAHREN ZUM ENTFERNEN EINER KARTUSCHE EINER CHROMATOGRAPHIEVORRICHTUNG**

(71) Anmelder: Büchi Labortechnik AG, 9230 Flawil (CH)
(72) Erfinder: Stuber, Ruben, 8500 Frauenfeld (CH); Bilger, Stefan, 9517 Mettlen (CH)
(74) Vertreter: Hepp Wenger Ryffel AG

(57) **Zusammenfassung**

Die Erfindung betrifft eine Halterung (100; 200) für eine Kartusche, insbesondere für eine Kartusche in der Säulenchromatographie. Die Halterung umfasst:
- ein Haltelement (101, 201) zur kraft- oder reibschlüssigen Verbindung mit zumindest einem Ende einer Kartusche,
- ein Ablöseelement (102, 202), insbesondere eine Abstosshülse, zum Lösen der Kartusche in Richtung einer Achse (x) der Kartusche vom Halteelement (101, 201),
- eine Bedienungsvorrichtung (103, 203) zum Betätigen des Ablöseelements (102, 202).

Das Ablöseelement (102, 202) ist zwischen einer Neutralposition und einer Ablöseposition bewegbar. Die Kartusche ist am Halteelement (101, 201) haltbar, wenn sich das Ablöseelement (102, 202) in der Neutralposition befindet. Die Kartusche ist vom Haltelement (101, 201) trennbar, wenn sich das Ablöseelement (102, 202) von der Neutralposition und die Ablöseposition bewegt.

## Beschreibung

Die Erfindung betrifft eine Halterung für eine Kartusche sowie ein Verfahren zum Entfernen einer Kartusche einer Chromatographie-Vorrichtung gemäss den Oberbegriffen der unabhängigen Ansprüche.

Sogenannte Flash-Kartuschen für die präparative Aufreinigung in der Chromatographie werden üblicherweise in einer Halterung eingespannt. Die Ein- und Austritte an der Kartusche sind üblicherweise Standard Luer-Luerlock-Verbindung, wie beispielsweise bei Spritzen. Auf der Eingangsseite ist dabei normalerweise der Luer-Lock, da auf dieser Seite der höchste Druck herrscht. Auf der Ausgangsseite der Kartusche ist nur der Rest-Systemdruck zu berücksichtigen. Bis anhin wurde immer die Seite mit der Luer-Lock-Verbindung geklemmt, gebremst, verkantet oder auf eine andere Art fixiert. Das Problem dabei ist aber, dass nach Gebrauch der Kartusche dieser Teil an der Kartusche derart klemmt, dass ein plötzliches Lösen eintritt und die restlichen Medien im Raum herumspritzen. Dies verhindert einerseits ein sauberes Arbeiten, anderseits können die Lösungsmittelreste mit dem Bediener in Kontakt kommen. Dies sollte wann immer möglich vermieden werden.

Es ist daher wenigstens eine Aufgabe der Erfindung die Nachteile des Standes der Technik zu überwinden. Es ist insbesondere eine Aufgabe der Erfindung eine Halterung für eine Kartusche bereitzustellen, die ein leichtes Einsetzen und Lösen der Kartusche nach Gebrauch erlaubt, simple und kostengünstig in der Herstellung ist und einen sicheren Umgang mit der Kartusche ermöglicht. Es ist auch eine Aufgabe der Erfindung, eine ergonomische und leicht handhabbare Halterung bereitzustellen. Es ist weitere eine Aufgabe, ein Verfahren zum Entfernen der Kartusche aus der Halterung bereitzustellen.

Die Aufgaben werden durch die unabhängigen Patentansprüche gelöst. Weitere Ausführungsformen ergeben sich aus den abhängigen Patentansprüchen.

Ein erster Aspekt der Erfindung betrifft eine Halterung für eine Kartusche, insbesondere für eine Kartusche in der Säulenchromatographie. Die Halterung umfasst:
- ein Haltelement zur kraft- oder reibschlüssigen Verbindung mit zumindest einem Ende einer Kartusche,
- ein Ablöseelement, insbesondere eine Abstosshülse, zum Lösen der Kartusche in Richtung einer Achse der Kartusche vom Halteelement,
- eine Bedienungsvorrichtung zum Betätigen des Ablöseelements.

Das Ablöseelement ist zwischen einer Neutralposition und einer Ablöseposition bewegbar, wobei die Kartusche am Halteelement haltbar ist, wenn sich das Ablöseelement in der Neutralposition befindet und wobei die Kartusche vom Haltelement trennbar ist, wenn sich das Ablöseelement von der Neutralposition und die Ablöseposition bewegt.

Diese erfindungsgemässe Halterung erlaubt ein besonders leichtes Einsetzen und Herauslösen der Kartusche. Das Verspritzen von Restflüssigkeiten in der Kartusche, insbesondere Lösungsmittel, kann so vermieden werden. Dies gewährleitstet wiederum ein sauberes Arbeiten und verringert den Kontakt des Benutzers mit Chemikalien.

Unter "einem Ende der Kartusche" ist der zu befestigende Teil der Kartusche zu verstehen. In handelsüblichen Kartuschen für die Chromatographie ist das üblicherweise eine Male-Luer-Verbindung.

Für einen ordnungsgemässen Betrieb werden üblicherweise beide Enden einer Kartusche mit einem Leitungssystem zum Durchleiten einer Flüssigkeit, meist unter Druck, verbunden. Im Betrieb kann dabei eine definierte Flüssigkeit in Richtung der Achse der Kartusche gepumpt werden. Typischerweise können zwei Verbindungssysteme vorliegen: i) an der Eingangs- wie Ausgangsseite der Kartusche ist die Zu- bzw. Ableitung in/aus der Kartusche mit einem Luer-Slip gelöst; ii) die Eingangsseite der Kartusche (auch Druckseite genannt) ist mit einem Luer-Lock versehen, während die Ausgangsseite der Kartusche einen Luer-Slip aufweist. Es ist aber auch möglich, dass beide Enden einen Luer-Lock aufweisen.

Es wurde festgestellt, dass es ausreicht, wenn einzig an der Luer-Verbindung eine dichte Stelle entsteht, um einen ordnungsgemässen Betrieb sicherstellen zu können.

Unter "bewegbar" ist insbesondere zu verstehen, dass das Ablöseelement schwenkbar oder drehbar zwischen einer Neutralposition und einer Ablöseposition ist.

Insbesondere kann die Bedienungsvorrichtung drehbar sein und derart mit dem Ablöseelement wirkverbunden sein, dass eine Drehbewegung der Bedienungsvorrichtung eine Bewegung des Ablöseelements aus der Neutralposition in die Ablöseposition bewirkt und/oder dass die Bedienungsvorrichtung entlang der Achse oder quer zur Achse bewegbar ist und eine Bewegung der Bedienungsvorrichtung entlang der Achse oder quer zur Achse eine Bewegung des Ablöseelements aus der Neutralposition in die Ablöseposition bewirkt.

Es ist auch möglich, dass zunächst eine Drehbewegung, gefolgt von einer Bewegung der Bedienvorrichtung entlang der Achse oder quer zur Achse der Kartusche erfolgt. Auch die umgekehrte Reihenfolge ist denkbar: Zunächst erfolgt eine Bewegung der Bedienvorrichtung entlang der Achse oder quer zur Achse der Kartusche, gefolgt von einer Drehbewegung.

Die drehbare Bedienvorrichtung ist besonders ergonomisch und ermöglicht eine einfache, insbesondere einhändige, Bedienung.

Vorzugsweise weist die Bedienvorrichtung ein Drehelement auf, vorzugswiese einen Drehkopf, und das Drehelement kann von einer Anfangsposition in mindestens eine Zwischenposition und in eine Endposition in einer Umfangsrichtung drehbar sein.

Das Ablöseelement und/oder das Drehelement kann/können eine bezogen auf eine Ebene senkrecht zur Achse geneigte Rampenfläche aufweisen. Die Rampenfläche kann das Drehelement mit dem Ablöseelement derart wirkverbinden, dass eine Drehbewegung des Drehelements eine Bewegung des Ablöseelements entlang der Achse der Kartusche aus der Neutralposition in die Ablöseposition bewirkt wird.

Die Rampenfläche kann einen Winkel aufweisen, der so zu wählen ist, dass dieser in sich nicht selbsthemmend ist. Die Neigung der Rampenfläche kann in erste Näherung ein Mass dafür sein, wie leicht die Kartusche aus der Halterung lösbar ist. So kann ein flacher Winkel, beispielsweise im Verhältnis-Bereich von Länge zu maximaler Höhe der Rampenfläche 1.0:0.25 betragen, was bedeuten, dass ein grosser Drehwinkel nötig ist, was weniger Lösekraft an der Hand erfordert. Ein eher steiler Winkel, beispielsweise im Verhältnis-Bereich 1.0:0.75, benötigt mehr Handkraft, aber einen kleineren Drehwinkel. Idealerwiese beträgt die maximale Höhe der Rampenfläche 4 mm.

Mit den Rampenflächen lässt sich auf eine einfache und kostengünstige Weise ein besonders effizienter Lösemechanismus realisieren.

Vorzugsweise weisen die Rampenfläche des Drehelements eine zu der Rampenfläche des Ablöseelements zumindest teilweise formkomplementäres Kontur auf, welche besonders bevorzugt an einem separaten Gegenstück, insbesondere einer Gegenhülse, ausgebildet ist.

Das Drehelement und das Gegenstück können in der Zwischenposition derart wirkverbunden werden, dass eine nachfolgende Drehung des Drehelements in Umfangsrichtung eine Drehung des Gegenstücks in Umfangrichtung bewirkt. Bei Drehung in Umfangrichtung kann es sich beispielsweise um eine Drehung in Uhrzeigersinn als auch gegen den Uhrzeigersinn handeln.

Die Zwischenposition des Drehelements ist vorteilhafterweise nach einer Drehung von maximal 45° erreicht ist. Bei einer Drehung über 45° hinaus, können sich das Drehelement und das Gegenstück gemeinsam weiterdrehen.

Die Halterung kann eine Rückstellfeder aufweisen und das Drehelement kann zur selbsttätigen Rückstellung in die Ausgangsposition durch die Rückstellfeder federbelastet sein. So lässt sich das Drehelement selbsttätig in die Ausgangsposition bringen.

In einer alternativen Ausführungsform kann die Bedienvorrichtung ein Druckelement umfassen, vorzugswiese einen Druckknopf, der in Richtung der Achse oder quer zur Achse der Kartusche bewegbar gelagert ist.

Das Druckelement kann von einer Anfangsposition in eine Endposition bringbar sein.

Vorzugsweise weisen das Ablöseelement und/oder das Druckelement mindestens eine bezogen auf eine Ebene senkrecht zur Achse der Kartusche geneigte Rampenfläche auf. Die mindestens eine Rampenfläche kann das Druckelement mit dem Ablöseelement derart wirkverbinden, dass eine Bewegung des Druckelements in Richtung der Achse oder quer zur Achse der Kartusche eine Bewegung des Ablöseelements aus der Neutralposition in die Ablöseposition bewirkt. Die oben gemachten Ausführungen zum Neigungswinkle der Rampenflächen gelten hier gleichermassen.

Vorzugsweise weist die mindestens eine Rampenfläche des Druckelements eine zu der mindestens einen Rampenfläche des Ablöseelements zumindest teilweise formkomplementäres Kontur auf, welche an einem, vorzugsweise separaten, Gegenstück ausgebildet ist. Die Rampenfläche kann bei einer Bewegung der Rampenfläche entlang des Gegenstücks mit dem Ablöseelement in Wirkverbindung bringbar sein und das Ablöseelement kann aus der Neutralposition in die Ablöseposition bringbar sein. Vorzugsweise wird die Ablöseposition durch Erreichen der Endposition des Druckelements erreicht.

Die Halterung mit dem Druckelement kann eine Rückstellfeder aufweisen und das Druckelement zur selbsttätigen Rückstellung in die Ausgangsposition durch die Rückstellfeder federbelastet sein.

Das Gegenstück kann eine Gegenhülse sein.

Die Bedienvorrichtung der erfindungsgemässen Halterungen kann über einen Höhenausgleich zur Aufnahme von Kartuschen mit unterschiedlich langen Verbindungsabschnitten verfügen. Dies ermöglicht eine serienmässige Produktion ohne die Halterung individual an die verwendeten Grössen anpassen zu müssen.

Dabei kann das Gegenstück entlang der Achse der Kartusche höhenverstellbar gelagert sein und wobei insbesondere das Drehelement und das Gegenstück in der Zwischenposition derart wirkverbunden werden, dass eine Bewegung des Gegenstücks entlang der Achse verhindert wird, wenn sich das Drehelement zwischen der Zwischenposition und der Endposition befindet und wobei das Gegenstück entlang der Achse bewegbar ist, wenn sich das Drehelement in der Anfangsposition befindet.

Die Wirkverbindung, die eine Bewegung des Gegenstücks entlang der Achse verhindert, kann durch ineinander greifbare Verzahnungen zwischen dem Bedienelement und dem Gegenstück realisiert sein.

Die Verzahnungen am Bedienelement zeigen vorzugswiese in Umfangsrichtung in Richtung des Gegenstücks, während die Verzahnungen des Gegenstücks vorteilhafterweise entgegen der Umfangsrichtung in Richtung des Bedienelements zeigen. Die Verzahnung ist vorzugsweise sowohl am Bedienelement als auch am Gegenstück in Form von Zacken, Zinken oder Keilen ausgebildet, die formschlüssig in die durch die Zacken, Zinken oder Keile geformten Kerben des jeweils anderen Bauteils greifen können.

Nachfolgend wird kurz die Funktion des Höhenausgleichs in Bezug auf den Drehmechanismus näher erläutert: Wird die Kartusche in die Halterung eingespannt, kann das Ablöseelement soweit in das Drehelement gestossen werden, wie es sich aus der Luer-Verbindung, der Kartuschenkonstruktion und der Andrückkraft ergeben kann. Das Gegenstück kann um das gleiche Mass nach oben entlang der Achse der Kartusche geschoben werden und steht nun in einer definierten Höhenposition. Wird das Drehelement nun gedreht, fahren als erstes die Verzahnungen des Drehelements und des Gegenstücks zusammen, greifen entsprechend der Höhenlage des Gegenstücks ineinander (leichte Korrektur nach oben/unten um maximal eine Zahnteilung möglich) und leiten somit die restliche Drehbewegung mittels des Winkels in das Ablöseelement ein, so dass das Ablöseelement von der Neutralposition in die Ablöseposition gebracht wird. Ein Stoss nach unten ist die Folge.

Auch beim beschriebenen Druckmechanismus kann das Ablöseelement und insbesondere das Gegenstück höhenverstellbar gelagert sein. Wird die Kartusche in die Halterung eingespannt, kann das Ablöseelement soweit in die Halterung gestossen werden, wie es sich aus der Luer-Verbindung, der Kartuschenkonstruktion und der Andrückkraft ergeben kann. Das Gegenstück kann um das gleiche Mass nach oben entlang der Achse der Kartusche geschoben werden und steht nun in einer definierten Höhenposition. In jeweils diskreten Abständen sind am Gegenstück mehrere Rampenflächen, vorzugswiese drei, angebracht. Wird das Druckelement nun betätigt, schiebt sich die mindestens eine Rampenfläche des Druckelements entlang der mindestens einen Rampenfläche des Gegenstücks und drückt dabei das Gegenstück entlang der Achse der Kartusche nach unten, so dass das Ablöseelement von der Neutralposition in die Ablöseposition gebracht wird. Die Kartusche wird vom Haltelement gelöst.

In einer weiteren alternativen Ausführungsform kann das Ablöseelement in Form eines Klemmelements, beispielsweise Klammer oder Zange, gestaltet sein und das Bedienelement in Form eines Hebels gestaltet sein, der mit dem Klemmelement verbunden ist. Das Klemmelement liegt dabei in der Neutralposition vorzugswiese auf der Kartusche auf und umschliesst bzw. umklammert einen Teil eines vorzugsweise Luer-Male-Anschlusses einer Kartusche. Durch Betätigen des an der Klemmvorrichtung vorgesehenen Hebels, ist das Klemmelement aus der Neutralposition in die Ablöseposition bewegbar und die Kartusche dadurch von der Halterung trennbar.

Vorzugsweise weist das Halteelement einen Luer-Female-Anschluss auf. Ein Luer-Female-Anschluss ist mit nahezu allen auf dem Markt befindlichen Kartuschen für chromatographische und medizinische Zwecke kompatibel.

Die Halterung kann einen Haltearm zur Befestigung der Halterung an einer Wand und/oder einem Gestell aufweisen. Auch die Befestigung an einem Gerät, wie beispielsweise Chromatographie-System ist möglich. Es ist aber auch denkbar, dass die Kartuschenhalterung ohne Haltearm auskommt und beispielsweise frei schwebend auf die Kartusche aufsetzbar ist.

Die Halterung kann einfach und kostengünstig mittels Spritzguss-verfahren hergestellt werden. Besonders bevorzugt sind optimierte Spritzguss-Verfahren. Bei diesen Verfahren werden in den Komponenten Versteifungen und Rippen geformt, die besondere Stabilität verleihen bei weniger Materialverbrauch.

Insbesondere sind für die Herstellung der Halterung lösemittelbeständige Kunststoffe geeignet, beispielsweise Polypropylen (PP), Polyethylen (PE), Polyetheretherketon (PEEK) oder Perfluorethylenpropylen (FEP).

Ein weiterer Aspekt der Erfindung betrifft eine Chromatographievorrichtung mit wenigstens einer Halterung wie vorhergehend beschrieben.

Ein weiterer Aspekt der Erfindung betrifft ein Verfahren zum Entfernen bzw. Lösen und insbesondere Wechseln einer Kartusche einer Chromatographievorrichtung, vorzugsweise einer Chromatographievorrichtung wie vorhergehend beschrieben mit einer Halterung für eine Kartusche wie vorhergehend beschrieben. Das Verfahren enthält die Schritte:
- Betätigen einer Bedienungsvorrichtung zum Betätigen eines Ablöseelements,
- Aufgrund der Betätigung der Bedienungsvorrichtung, Bewegen eines Ablöseelements von einer Neutralposition in einer Ablöseposition,
- Kontaktieren der Kartusche mit dem Ablöseelement während der Bewegung des Ablöseelements,
- Trennen einer kraft- oder reibschlüssigen Verbindung zwischen der Kartusche und einem Haltelement durch die Bewegung des Ablöseelements von einer Neutralposition in die Ablöseposition,
- Optionales Einsetzen einer neuen Kartusche in das Halteelement, wodurch die Bedienungsvorrichtung bevorzugt von der Ablöseposition in die Neutralposition zurückgesetzt wird.

Nachfolgend wird die Erfindung anhand von Ausführungsbeispielen näher erläutert. Dabei handelt es sich lediglich um besonders bevorzugte Ausführungsformen, die nicht einschränkend zu verstehen sind. Gleiche Referenzzeichen kennzeichnen gleiche Bauteile. Es zeigen:
- Figur 1: eine perspektivische Ansicht einer ersten Ausfüh-rungsform einer erfindungsgemässen Halterung mit Gehäuse.
- Figur 2: einen Querschnitt der ersten Ausführungsform.
- Figur 3: eine perspektivische Ansicht der ersten Ausfüh-rungsform ohne Gehäuse.
- Figur 4: eine weitere perspektivische Ansicht der ersten Ausführungsform ohne Gehäuse.
- Figur 5: eine perspektivische Schnittansicht einer zweiten Ausführungsform einer erfindungsgemässen Halte-rung.
- Figur 6: eine zweite perspektivische Schnittansicht der zweiten Ausführungsform.
- Figur 7: eine perspektivische Innenansicht der zweiten Aus-führungsform.
- Figur 8: eine zweite perspektivische Innenansicht der zwei-ten Ausführungsform.

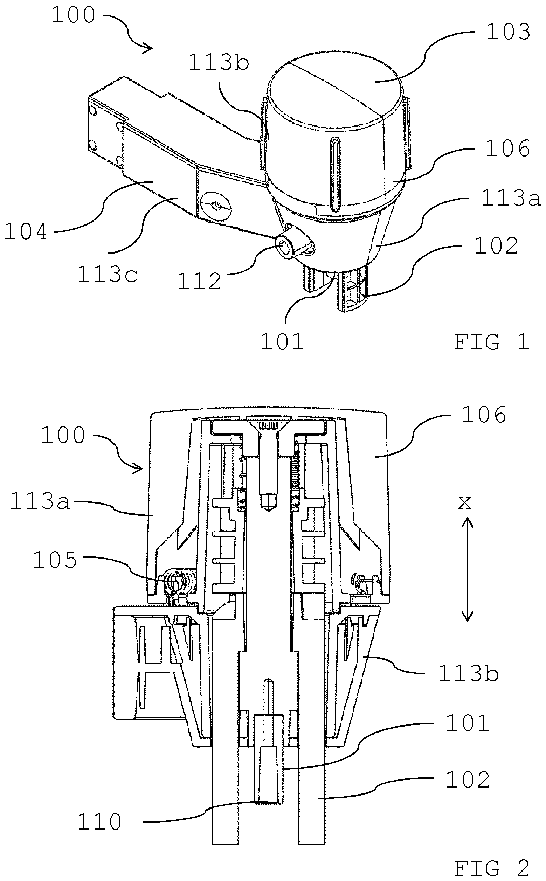

Figur 1 zeigt eine perspektivische Ansicht einer erfindungsgemässen Halterung 100. Die Halterung umfasst ein Halteelement 101 mit einem Female-Luer-Anschluss 110 (Figur 2), ein Ablöseelement 102, ein Bedienelement 103 in Form eines Drehelements 106. Die Halterung 100 ist über einen Haltearm 104 mit einer Wand, einem Gestell oder einem Gerät (nicht gezeigt) verbindbar. Das Drehelement 106, das Ablöseelement und der Haltearm sind jeweils von einer Verkleidung 113a, 113b und 113c umgeben. Die Verkleidungen sind vorzugsweise aus einem Kunststoffmaterial und mittel Spritzguss hergestellt.

Figur 2 zeigt einen Querschnitt durch die Verkleidung 113a und 113b der Halterung 100 der ersten Ausführungsform. Zusätzlich zeigt diese Figur eine Rückstellfeder 105, mit welcher das Drehelement 106 nach Betätigung selbsttätig in eine Ausgangsposition rückstellbar ist. Die Kartusche (nicht gezeigt) wird an das Haltelement 101 in Richtung der Achse der Kartusche angebracht.

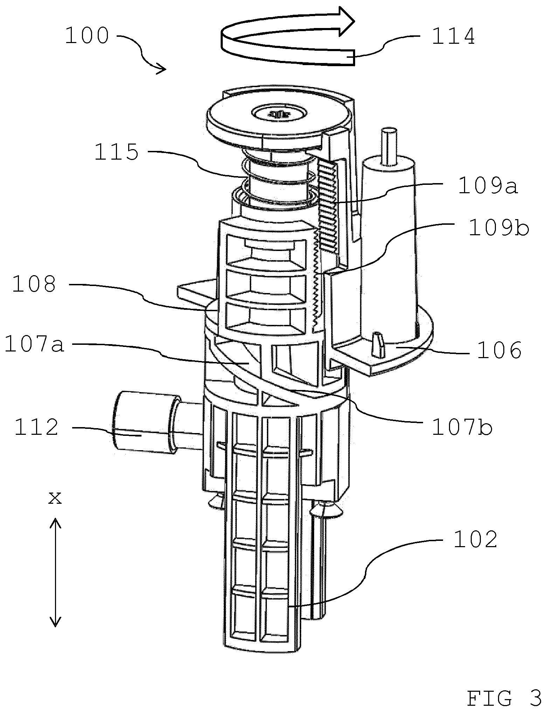

Figur 3 zeigt die erfindungsgemässe Halterung 100 ohne Gehäuse. Das Ablöseelement 102 weist eine bezogen auf eine Ebene senkrecht zur Achse x geneigte Rampenfläche 107a auf. Das Drehelement 106 ist über eine Gegenhülse 108 mit dem Ablöseelement wirkverbunden. Die Gegenhülse weist eine zur Rampenflache 107a des Ablöseelements 102 zumindest teilweise formkomplementäre Rampe 107b auf. Das Gegenstück 108 verfügt weiter über Verzahnungen 109b in Form von Zacken, die entgegen den Uhrzeigersinn in Richtung des Drehelements zeigen und mit entgegengesetzter Verzahnung 109a am Drehelement 106 ineinander greifen können. Die Verzahnungen am Drehelement zeigen in Uhrzeigersinn 114. Die Verzahnungen 109a und 109b bilden einen Teil eines Höhenausgleichs. Zu dem Höhenausgleich gehört eine Feder 115, die das Einspannen der Kartusche in die Halterung 100 ermöglicht. Des Weiteren ist ein Anschluss 112 gezeigt, der mit einer Eingangsseite einer Kartusche (nicht gezeigt) verbunden werden kann und so ein Durchleiten einer Flüssigkeit durch die Kartusche ermöglicht.

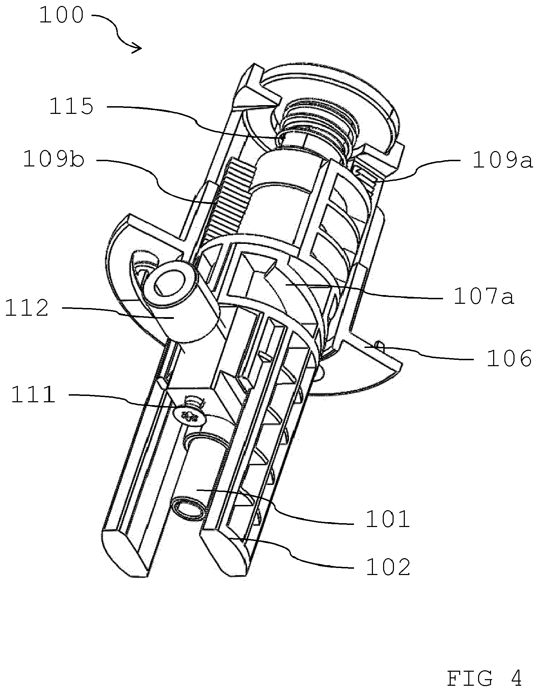

Figur 4 zeigt die erfindungsgemässe Halterung 100 ohne Verkleidung in einer weiteren perspektivischen Ansicht. Zusätzlich zu den vorgenannten Bauteilen ist eine Verschraubung 111 des Anschlusses 112 zu erkennen.

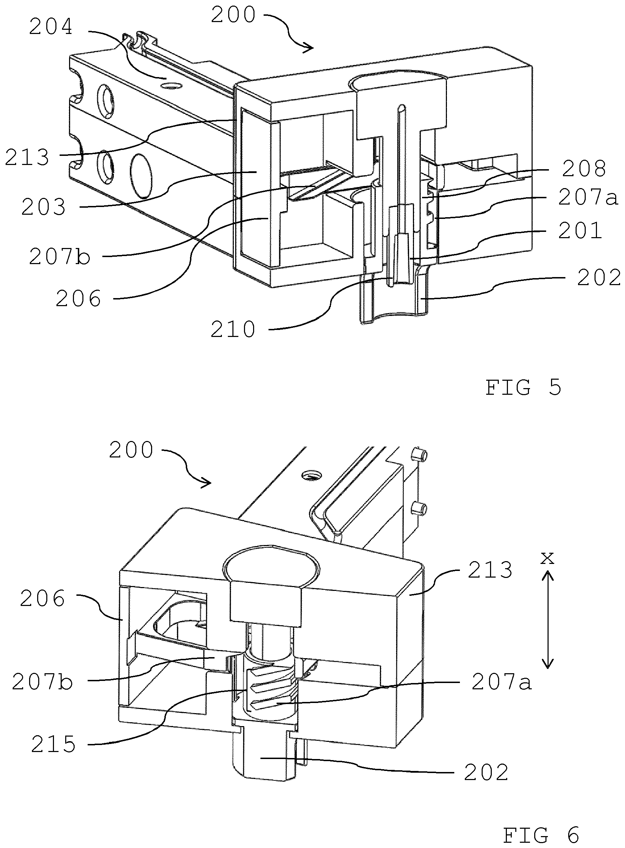

Die Figuren 5 bis 8 zeigen verschiedene Perspektiven einer zweiten Ausführungsform. Figur 5 zeigt die zweite Ausführungsform 200 in einer perspektivischen Schnittansicht. Die Halterung 200 umfasst analog zur ersten Ausführungsform (100, Figuren 1 bis 4) ein Halteelement 201 mit einem Luer-Female-Anschluss 210 und ein Ablöseelement 202. In dieser Ausführungsform ist das Bedienelement als Druckelement in Form eines Druckknopfs ausgebildet. Durch Betätigen des Druckelements 206 kann mindestens eine Rampenfläche 207b mit mindestens einer Rampenfläche 207a des Ablöseelements 202 in Wirkverbindung treten und so die Kartusche (nicht gezeigt) aus der Halterung 200 lösen. Die Rampenflächen 207a sind an einem Gegenstück 208 des Ablöseelements 202 angebracht. Die Halterung 200 ist ebenfalls über einen Haltearm 204 mit einer Wand, einem Gestell oder einem Gerät 8nicht gezeigt) verbindbar. Nach aussen ist die Halterung 200 mit einer Verkleidung 213 bedeckt.

Figur 6 zeigt eine zweite perspektive Schnittansicht der zweiten Ausführungsform 200. Neben den bereits für Figur 5 beschriebenen Komponenten sind in dieser Figur mehrere Rampenflächen 207a des Ablöseelements zu erkennen. Diese Rampenflächen 207a bilden einen Höhenausgleich 215. Je nach verwendeter Kartusche wird das Gegenstück 208 unterschiedlich stark in Richtung der Achse X der Kartusche nach oben in die Halterung geschoben, so dass entweder die obere, mittlere oder untere Rampenfläche 207a beim Ablösen mit der Rampenfläche 207b des Druckelements 206 in Wirkverbindung tritt.

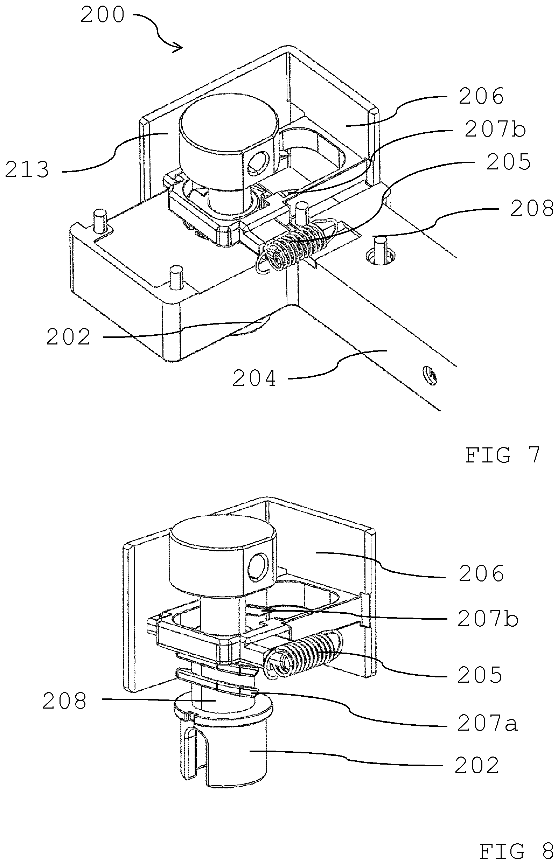

Figur 7 zeigt eine perspektivische Innenansicht der zweiten Ausführungsform. Die Verkleidung 213 ist teilweise entfernt. Diese Figur zeigt zusätzlich eine Rückstellfeder 205, die dazu dient, das Druckelement in die Ausgangsposition zu bringen. Die Ausgangsposition ist bei komplett entspannter Feder 205 gegeben.

Figur 8 zeigt eine zweite perspektivische Innenansicht der zweiten Ausführungsform 200.

## Patentansprüche

1. Halterung (100; 200) für eine Kartusche, insbesondere für eine Kartusche in der Säulenchromatographie, umfassend
- ein Haltelement (101, 201) zur kraft- oder reibschlüssigen Verbindung mit zumindest einem Ende einer Kartusche,
- ein Ablöseelement (102, 202), insbesondere eine Abstosshülse, zum Lösen der Kartusche in Richtung einer Achse (x) der Kartusche vom Halteelement (101, 201),
- eine Bedienungsvorrichtung (103, 203) zum Betätigen des Ablöseelements (102, 202),
wobei das Ablöseelement (102, 202) zwischen einer Neutralposition und einer Ablöseposition bewegbar ist, wobei die Kartusche am Halteelement (101, 201) haltbar ist, wenn sich das Ablöseelement (102, 202) in der Neutralposition befindet und wobei die Kartusche vom Haltelement (101, 201) trennbar ist, wenn sich das Ablöseelement (102, 202) von der Neutralposition in die Ablöseposition bewegt.

2. Halterung (100) nach Anspruch 1, wobei die Bedienungsvorrichtung (103) drehbar ist und derart mit dem Ablöseelement (102) wirkverbunden ist, dass eine Drehbewegung der Bedienungsvorrichtung (103) eine Bewegung des Ablöseelements (102) aus der Neutralposition in die Ablöseposition bewirkt und/oder dass die Bedienungsvorrichtung (103) entlang der Achse (x) oder quer zur Achse (x) bewegbar ist und eine Bewegung der Bedienungsvorrichtung (103) entlang der Achse (x) oder quer zur Achse (x) eine Bewegung des Ablöseelements (102) aus der Neutralposition in die Ablöseposition bewirkt.

3. Halterung (100) nach Anspruch 1 oder 2, wobei die Bedienvorrichtung (103) ein Drehelement (106) aufweist, vorzugswiese einen Drehkopf, und das Drehelement (106) von einer Anfangsposition in mindestens eine Zwischenposition und in eine Endposition in einer Umfangsrichtung drehbar ist.

4. Halterung (100) nach einem der Ansprüche 1 bis 3, wobei das Ablöseelement (102) und/oder das Drehelement (106) eine bezogen auf eine Ebene senkrecht zur Achse (x) geneigte Rampenfläche (107a, 107b) aufweist und wobei die Rampenfläche (107a, 107b) das Drehelement (106) mit dem Ablöseelement (102) derart wirkverbindet, dass eine Drehbewegung des Drehelements (106) eine Bewegung des Ablöseelements (102) entlang der Achse (x) aus der Neutralposition in die Ablöseposition bewirkt.

5. Halterung (100) nach Anspruch 4, wobei die Rampenfläche (107b) des Drehelements (106) eine zu der Rampenfläche (107a) des Ablöseelements (102) zumindest teilweise formkomplementäres Kontur aufweist, welche vorzugsweise an einem separaten Gegenstück (108), insbesondere einer Gegenhülse, ausgebildet ist.

6. Halterung nach Anspruch 5, wobei das Drehelement (106) und das Gegenstück (108) in der Zwischenposition derart wirkverbunden werden, dass eine nachfolgende Drehung des Drehelements (106) in Umfangsrichtung eine Drehung des Gegenstücks (108) in Umfangrichtung bewirkt.

7. Halterung (100) nach einem der Ansprüche 2 bis 6, wobei die Halterung eine Rückstellfeder (105) aufweist und das Drehelement (106) zur selbsttätigen Rückstellung in die Ausgangsposition durch die Rückstellfeder (105) federbelastet ist.

8. Halterung (200) nach Anspruch 1 oder 2, wobei die Bedienvorrichtung (203) ein Druckelement (206) umfasst, vorzugswiese einen Druckknopf, der in Richtung der Achse (x) oder quer zur Achse (x) bewegbar gelagert ist.

9. Halterung (200) nach Anspruch 8, wobei das Ablöseelement (202) und/oder das Druckelement (206) mindestens eine bezogen auf eine Ebene senkrecht zur Achse (x) geneigte Rampenfläche (207a, 207b) aufweist und wobei die mindestens eine Rampenfläche (207a, 207b) das Druckelement (206) mit dem Ablöseelement (202) derart wirkverbindet, dass eine Bewegung des Druckelements (206) in Richtung der Achse (x) oder quer zur Achse (x) eine Bewegung des Ablöseelements (202) aus der Neutralposition in die Ablöseposition bewirkt.

10. Halterung (200) nach Anspruch 9, wobei die mindestens eine Rampenfläche (207b) des Druckelement (206) eine zu der mindestens einen Rampenfläche (207a) des Ablöseelements (202) zumindest teilweise formkomplementäres Kontur aufweist, welche an einem, vorzugsweise separaten, Gegenstück (208) ausgebildet ist, wobei die Rampenfläche (207a) bei einer Bewegung der Rampenfläche (207b) entlang des Gegenstücks (208) mit dem Ablöseelement (202) in Wirkverbindung bringbar ist und das Ablöseelements (202) aus der Neutralposition in die Ablöseposition bringbar ist.

11. Halterung (100, 200) nach einem der vorherigen Ansprüche, wobei die Bedienvorrichtung (103, 203) über einen Höhenausgleich (105, 205) zur Aufnahme von Kartuschen mit unterschiedlich langen Verbindungsabschnitten verfügt.

12. Halterung (100, 200) nach Anspruch 11, wobei das Gegenstück (108; 208) entlang der Achse (x) höhenverstellbar gelagert ist und wobei insbesondere das Drehelement (106) und das Gegenstück (108) in der Zwischenposition derart wirkverbunden werden, dass eine Bewegung das Gegenstücks (108) entlang der Achse (x) verhindert wird, wenn sich das Drehelement (106) zwischen der Zwischenposition und der Endposition befindet und wobei das Gegenstück (108) entlang der Achse (x) bewegbar ist, wenn sich das Drehelement (106) in der Anfangsposition befindet.

13. Halterung (100) nach Anspruch 12, wobei die Wirkverbindung, die eine Bewegung des Gegenstücks (108) entlang der Achse (x) verhindert, durch ineinander greifbare Verzahnungen (109a, 109b) zwischen dem Bedienelement (106) und dem Gegenstück (108) realisiert ist.

14. Chromatographievorrichtung mit wenigstens einer Halterung (100, 200) gemäss einem der Ansprüche 1 bis 13.

15. Verfahren zum Entfernen und insbesondere Wechseln einer Kartusche einer Chromatographievorrichtung, enthalten die Schritte
- Betätigen einer Bedienungsvorrichtung (103, 203) zum Betätigen eines Ablöseelements (102, 202),
- Aufgrund der Betätigung der Bedienungsvorrichtung (103, 203), Bewegen eines Ablöseelements (102, 202) von einer Neutralposition in einer Ablöseposition,
- Kontaktieren der Kartusche mit dem Ablöseelement (102, 202) während der Bewegung des Ablöseelements,
- Trennen einer kraft- oder reibschlüssigen Verbindung zwischen der Kartusche und einem Haltelement (101, 201) durch die Bewegung des Ablöseelements (102, 202) von einer Neutralposition in die Ablöseposition,
- Optionales Einsetzen einer neuen Kartusche in das Halteelement (101, 201), wodurch die Bedienungsvorrichtung (103, 203) bevorzugt von der Ablöseposition in die Neutralposition zurückgesetzt wird.
